# EUROPEAN PATENT SPECIFICATION

(11) **EP 3 368 738 B1**
(45) Date of publication and mention of the grant of the patent: **12.02.2025**
(21) Application number: 16732764.2
(22) Date of filing: 17.06.2016
(51) Int. Cl.: E21B 41/00, E21B 43/267, C09K 8/60, C09K 8/80

(54) **METHOD FOR PERMANENT STORAGE OF CARBON DIOXIDE IN SHALE RESERVOIRS**
VERFAHREN ZUR PERMANENTEN LAGERUNG VON KOHLENSTOFFDIOXID IN SCHIEFERRESERVOIRS
PROCÉDÉ PERMETTANT LE STOCKAGE PERMANENT DE DIOXYDE DE CARBONE DANS DES RÉSERVOIRS DE SCHISTE

(30) Priority: 12.08.2015 US 201514825089; 02.11.2015 US 201562249777 P; 09.06.2016 US 201662347702 P; 09.06.2016 US 201662347708 P
(43) Date of publication of application: 05.09.2018
(73) Proprietor: Prostim Labs, LLC, Houston, TX 77024 (US)
(72) Inventor: THRASH, John, Houston, Texas 77024 (US)
(74) Representative: J A Kemp LLP
(86) International application number: PCT/IB2016/053635
(87) International publication number: WO 2017/025820

(56) References cited:
- EP-A1- 1 999 340
- WO-A1-2011/044612
- US-A1- 2011 209 882
- US-A1- 2012 067 568
- ROOZBEH KHOSROKHAVAR ET AL: "Shale Gas Formations and Their Potential for Carbon Storage: Opportunities and Outlook", ENVIRONMENTAL PROCESSES, vol. 1, no. 4, 18 September 2014 (2014-09-18), pages 595 - 611, XP055298483, ISSN: 2198-7491, DOI: 10.1007/s40710-014-0036-4

## Description

### FIELD OF THE INVENTION

The present invention relates to methods for permeant storage of carbon dioxide in geological formations.

### BACKGROUND OF THE INVENTION

Carbon sequestration can be divided into two categories: the enhancement of the natural sinking rates of CO₂ and direct discharge of human generated CO₂.

The sequestration options in the first category include terrestrial sequestration by vegetation, ocean sequestration by fertilization, and an enhancement of the rock weathering process. In the direct discharge options, the CO₂ produced from large point sources, such as thermal power stations, would be captured and separated, then transported and injected either into the ocean or underground.

Each option has advantages and disadvantages in terms of capacity, cost, the time scale of the sequestration, the stability of sequestered CO₂, and additional environmental impacts, which depend on the location, time, and amount of sequestration. Reliable evaluations of the mitigation efficiency are desirable for each sequestration option upon implementation (Yamasaki, et al. 2003).

It has been stated that biological sequestration is a natural approach; however, despite this advantage it is known that significant disadvantages are associated with this approach. For example, while freshwater marshes have been shown to be strong sinks for carbon dioxide (CO₂) on an annual basis relative to other wetland types, it is likely that these ecosystems are also strong emitters of methane (CH₄), reducing their carbon (C) sequestration potential. Thus, the substantial CH₄ emissions from marshes need to be considered in national and global estimates of wetland greenhouse gas contribution to the global carbon cycle (Strachan et al, 2015).

Ocean sequestration is another approach that can be characterized as being natural. Although the oceans represent possibly the largest potential CO₂ sink, ocean sequestration involves problems including poorly understood physical and chemical processes, efficiency, cost, technical feasibility, and possibly the most worrying, long-term environmental impact. In addition, ocean circulation poses legal, political and international limitations to this technology. Carbon dioxide forms carbonic acid when dissolved in water, so ocean acidification is a significant consequence of elevated carbon dioxide levels, and limits the rate at which it can be absorbed into the ocean.

The sequestration of CO₂ by a sacrificial material that will then be used or disposed of represents a crossover between the two categories. For example, mineral CO₂ sequestration, i.e., carbonation of alkaline silicate Ca/Mg minerals, may be considered analogous to natural weathering processes. Mineral CO₂ sequestration may be considered for the reduction of carbon dioxide emissions to the atmosphere. However, the total volume of material required to make an impact on global CO₂ emissions would be cost prohibitive (Huijens, et al., 2005).

At this time, CO₂ sequestration in geological media appears to be an option for long-term sequestration of CO₂. In such a system, it is proposed that CO₂ may be stored deep underground. At depth, hydrostatic pressure would act to keep the stored CO₂ in a liquid state (White, et al., 2005).

Sequestration in deep underground formations of large amounts of CO₂, captured from large stationary sources, such as power plants, oil upgraders and refineries, is one method that is under consideration for reducing greenhouse gas emissions to the atmosphere in Canada and United States (Bennion and Bachu, 2005).

While in a typical well, the CO₂ would be sealed by capping the well with cement, degradation of the cement may prevent such wells from being a long-term solution. Exposure of well cements to CO₂ results in the formation of different CaCO₃ modifications, proving carbonation. Carbonation rates were relatively low, but most detrimental were the cracking of specimens as a result of massive CaCO₃ formation which comes along with expansion (Lesti et al., 2013) . Although some of the reactions with cement can be beneficial, a loss of compressive strength of the cement is observed (Condor and Asghan, 2009).

WO 2011/044612 A1 discloses proppants, and in particular reactive proppants capable of interacting with formation or activation fluids to be thereby activated to modify fracture flow paths in oil and gas reservoirs to, inter alia, enhance oil and gas production.

EP 1999340 A1 discloses a method of fracturing a coalbed gas reservoir.

US 2012/0067568 A1 discloses a method of using carbon dioxide in recovery formation deposits.

In summary, current CO₂ geologic sequestration technology suffers various problems and inadequacies . Failure of the geologic formation or reservoir to contain the CO₂ due to cement failure may result in catastrophic release of vast quantities of CO₂ at some undetermined point in the future.

### BRIEF SUMMARY OF THE INVENTION

Subject matter of this disclosure provides a method for sequestration in deep underground formations of large amounts of CO₂, with improved risk of leakage such as, for example, long-term leakage.

According to the present invention, there is disclosed a method for storing carbon containing compounds in a formation associated with a fracturing well formed by hydraulic fracturing, the method comprising: injecting proppant into the formation; fracturing the formation, thereby forming fractures; removing hydrocarbons from in situ loci within the formation; injecting the carbon containing compounds into the formation; and injecting a solution into the formation, the solution capable of at least partially degrading the structural integrity of the proppant positioned within the formation, thereby resealing the fractures.

In an embodiment, a sequestration method may include storing CO₂ in an underground geologic formation by introducing the CO₂ into a well formed in the formation by hydraulic fracturing, and closing the fractures to seal the well with the CO₂ stored in the formation and prevent escape of the stored CO₂ through the well fractures . Such a sequestration method may include introducing the CO₂ into a well formed by hydraulic fracturing for the production of hydrocarbons such as, for example, shale gas, from a reservoir of the underground geologic formation. A sequestration method as disclosed may include degrading proppant in the fractures to cause resealing of the fractures, such as by geologic forces on the fractures. A large- scale sequestration method may include introducing a large volume of CO₂ into a plurality of wells formed by hydraulic fracturing for production of hydrocarbons from reservoirs of at least one underground geologic formation, and includes degrading proppant in the fractures so as to cause resealing of hydraulic fractures by geologic forces, which may prevent escape of stored CO₂ from the formation through the hydraulic fractures and well. It will be understood that suitable geologic formations may include shale formations. As used herein, "shale" includes shale(s), shale gas, shale reservoirs, shale source rocks, shale formations, shale wells, shale samples, shale (and tight oil) resources.

In an arrangement useful for understanding the invention, a sequestration system may include a well formed in the formation by hydraulic fracturing, CO₂ stored in the formation by introducing the CO₂ through the well, and a closed hydraulic fracture of the well sealing the stored CO₂ in the formation to prevent escape of the stored CO₂ through the fractures and well. In an embodiment, a sequestration system may include a well formed by hydraulic fracturing associated with production of hydrocarbons, such as shale gas, from a reservoir of the underground formation. A sequestration system as disclosed may include degraded proppant that provides for resealing of the fractures , such as by geologic forces on the fractures. In an eafoodiment, a large-scale sequestration system may include a plurality of wells formed by hydraulic fracturing associated with production of shale gas from reservoirs of at least one underground geologic formation, wherein the well includes sealed hydraulic fractures preventing escape of stored CO₂ from the formation through the hydraulic fractures.

In an arrangement useful for understanding the invention, the sequestration system for permanent storage of CO₂ may include a well formed in communication with a geologic formation with hydraulic fractures; CO₂ stored under pressure in the formation; and the hydraulic fractures sealed to prevent escape of stored CO₂ from the geologic formation through the hydraulic fractures into the wellbore. Such a sequestration system may include a well formed by hydraulic fracturing associated with production of hydrocarbons, such as shale gas, from a reservoir of the geologic formation. A sequestration system as disclosed may include degraded proppant, such that the hydraulic fractures are resealed by geologic forces.

It will be understood that shale gas represents the largest fraction of natural gas in the continental United States. With an estimated 482 trillion cubic feet (Tcf) (13.6 trillion cubic metres) of hydrocarbon (Nicot and Scanlon, 2012), shale gas has the potential to be the primary energy source for power generation in the US for the coming decades. The ability to extract shale gas in an economic and timely manner has been achieved by the development and use of hydraulic fracturing and horizontal drilling techniques. Hydraulic fracturing (also known as "fracing" or "fracking") uses water, proppant, and various chemical additives, pumped at high pressures into the well bore, to induce fracturing of the shale source rock and thus create greater permeability so the gas can migrate into the well bore and to the surface. The facturing fluid chemistry is tailored on a case-by-case basis for each geographical area and sometimes even on a well-by-well basis.

Fracking is necessary to produce hydrocarbons from shale formations because shale has very low permeability (concrete is 102-104 times more permeable) and there has been little or no movement of fresh water (or waters of a different mineral content) since the rock was formed. Furthermore, shale is under-saturated to water and the level of salt in the connate water within the shale is often at salinity equal to the seawater the shale was deposited from. When shale is under-saturated, introducing fresh water or moderate salinity water in a frac, causes salts, some organics , and other minerals that were previously in equilibrium in the shale to becoming solubilized with the connate waters. It is important that shale reservoir has been "isolated" from external chemistry for several million years. In other words, until the shale reservoir is fracked, there is no route for hydrocarbons to escape, meaning,for example, that if natural gas could be exchanged for CO₂ and the reservoir returned to is pre-frack state the CO₂ would be contained by the same forces that contained the gas for millions of years. Given that shale gas in the U.S. is formed during the Jurassic period, this qives a proven stability of over 100 million years

The present invention provides a method for the removal of natural gas/methane from in situ loci within wells to (i) provide fully de-carbonized surplus electricity, and (ii) power the re-injection of the resulting carbon formed (CO₂) upon combustion in the electric generator along with large volumes of atmospheric CO₂, culminating in a technically and commercially feasible, permanent (in terms of geologic time), and large scale removal of CO₂ from the Earth's surface/atmosphere.

For the methane molecules produced, this is a cradle-to-grave cycle wherein the same carbon atoms that are harvested and used for power generation are then returned to their original geologic resting place through the same fracture system, pipe and compression that delivered them into power generation service.

Once the shale reservoir and fracture systems are at or near full volumetric storage capacity with sequestered CO₂ (at or near discovery pressure) , the specialized proppant used in this invention is dissolved by injecting an acidic aqueous solution, thus allowing geologic forces, previously resisted by the proppant, to collapse and seal closed the fracture system, permanently trapping the CO₂ within the rock.

Concerning de-carbonization, the result of this process via this disclosed subject matter is the permanent, in terms of geologic time, storage of CO₂ that is not dependent upon wellbore sealing or the long term integrity thereof. A system, and method, as disclosed may provide de-carbonized, or fully de-carbonized, power generation that supports fully, or in part, the continued and economic use of intermittent supplies of electricity such as, for example, generation of electricity by wave, wind, and solar energy sources.

In an arrangement useful for understanding the invention, a sequestration system may include large cohorts of hydrocarbon productive shale wells that may be stimulated by hydraulic fracturing utilizing certain select reservoir fluids suffused with specialized proppant (the particles maintaining fracture patency during production and re-injection) which may be dissolved at the end of the CO₂ sequestration cycle with a small volume of an acidic aqueous solution. Embodiments may further include natural gas and carbon dioxide compatible surface facilities such as compression, dehydration, filter/separators, and measurement equipmens which may be functionally bi-directional.

Embodiments may optionally include, in certain circumstances, natural gas and/or carbon dioxide smaller scale temporary storage reservoirs or surface facilities which may facilitate the logistics of material movements and placement.

Embodiments may optionally include large (e.g. multi-hundred Megawatt F-class combined cycle turbines) and/or small (peaking gas fired generators) scale electric power generating and ancillary equipment.

Embodiments may optionally include pre-combustion (e.g. oxy-fuel systems which provide O₂ for combustion with the natural gas) and/or post-combustion carbon dioxide capture systems (e.g. electrolytic amine or Ca(OH)₂ systems).

Embodiments may optionally include freshwater surface handling facilities.

Sequestration of CO₂ underground is hampered by the paucity and adverse locational distribution of suitable reservoirs to serve as economically feasible containers of large volumes of CO₂. Certainly depleted conventional reservoirs and deep aquifers could serve in this role. However, their relative limited capacity to meet the magnitude of the need and/or difficulties in overcoming discovery pressures are very challenging aspects to their utilization, irrespective of availability and location.

It may be vastly more efficient to store CO₂ in shales depleted of methane or CH₄. Results have shown that CO₂ is approximately two to three times more adsorptive than CH₄ in both the pure mineral constituents and actual shale samples (R. Heller and Zoback, 2014). This does not include the volume attained by the proppant.

Given that natural gas is predominantly methane (CH₄), its combustion during power generation would result in one molecule of CO₂ per molecule of CH₄ combusted. Combustion may be represented by the following equation: CH₄ + 2O₂ → CO₂ + 2H₂O. Based upon this, it can also be assumed that for every two to three molecules that can be adsorbed within a well, one of the CO₂ molecules was generated during power generation using the produced methane or CH₄. Therefore, shale can be used for an over adsorption of one to two equivalents of CO₂ per each CH₄ produced from the original wells. This makes the entire process profoundly net reductive of atmospheric CO₂. Disclosed subject matter makes possible the production of electricity from natural gas, using shale gas and current infrastructure, or new infrastructure as herein disclosed, with the significant benefit of net negative emissions of CO₂.

While embodiments usable within the scope of the present disclosure can be powered using on-site reciprocating engines (e.g., diesel engines), coupled with turbine generators and/or similar power systems, in an embodiment, one or more system components can be configured for use with electrical power. For example, the pressure subsystem can include an electric-powered driver (e.g., an electric motor or similar source of force) in communication with and actuating the pump, while an electrical power source powers the electric-powered driver. In an embodiment, a turbine generator (e.g., a natural gas turbine or similar source) can be used to provide power to an electric motor, which in turn drives the pump. Alternatively, or additionally, a grid-based power source can be used to power the electric-powered driver. In an embodiment, an electric-powered driver can be configured for selective and/or simultaneous operation using a grid-based or an on-site power source. Where a grid-based power sourced is used, in an embodiment, one or more additional transformers can be used to convert power from the grid-based power source to a desired voltage. In use, a single pump can be actuated using a single electric-powered driver or multiple electric-powered drivers, and multiple pumps can be actuated using a single electric-powered driver or multiple electric-powered drivers. Similarly, a single power source can power one or multiple electric-powered drivers, or one or multiple electric-powered drivers can be powered by multiple power sources.

### BRIEF DESCRIPTION OF THE DRAWINGS

The novel features believed characteristic of the disclosed subject matter will be set forth in any claims that are filed. The disclosed subject matter itself, however, further objectives, and advantages thereof, will best be understood by reference to the following detailed description of an illustrative embodiment when read in conjunction with the accompanying drawings, wherein:
**FIG. 1** illustrates an exemplary components diagram of the present disclosure.
**FIG. 2** illustrates an exemplary production flowchart diagram of the present disclosure.
**FIG. 3** illustrates an exemplary CH₄ recovery flowchart diagram of the present disclosure.
**FIG. 4** illustrates an exemplary CO₂ top-off flowchart diagram of the present disclosure.
**FIG. 5** illustrates an exemplary dissolved proppant flowchart diagram of the present disclosure.
**FIG. 6** displays a method for storing carbon compounds in an underground reservoir.
**FIG. 7** illustrates an exemplary production flowchart diagram of the present disclosure.
**FIG. 8** illustrates an exemplary production flowchart diagram of the present disclosure.
**FIG. 9** illustrates an exemplary production flowchart diagram of the present disclosure.
**FIG. 10** illustrates a method for storing carbon containing compounds in a formation associated with a pre-existing fracturing well formed by hydraulic fracturing in accordance with embodiments.
**FIG. 11** illustrates a method for storing carbon containing compounds in a formation associated with a fracturing well formed by hydraulic fracturing in accordance with embodiments.
**FIG. 12** illustrates a method for producing electricity by combustion of hydrocarbons without releasing carbon containing compounds into the atmosphere in accordance with embodiments.
**FIG. 13** is a simplified block diagram illustrating aspects of a system 1300 for storing carbon containing compounds in a pre-existing fractured well in accordance with embodiments.
**FIG. 14** is a simplified block diagram illustrating a system 1400 for storing carbon containing compounds in a fractured well in accordance with embodiments.

### DETATIED DESCRIPTION OF ILLUSTRATIVE EMBODIMENTS

Reference now should be made to the drawings, in which the same reference numbers are used throughout the different figures to designate the same components.

Before describing selected embodintents of the present invention in detail, it is to be understood that the present invention is not limited to the particular embodiments described herein. The disclosure and description herein is illustrative and explanatory of one or more presently preferred embodiments of the invention and variations thereof, and it will be appreciated by those skilled in the art that various changes in the design, organization, order of operation, meansof operation, equipament structures and location, methodology, and use of mechanical equivalents may be made within the scope of the present invention as defined by the claims.

As well, it should be understood the drawings are intended illustrate and plainly disclose presently preferred embodiments of the invention to one of skill in the art, but are not intended to be manufacturing level drawings or renditions of final products and may include simplified conceptual views as desired for easier and quicker understanding or explanation of the invention. As well, the relative size and arrangement of the components may differ from that shown and still operate within the spirit of the invention as described throughout the present application.

Moreover, it will be understood that various directions such as "upper", "lower", "bottom", "top", "left", "right", and so forth are made only with respect to explanation in conjunction with the drawings, and that the components may be oriented differently, for instance, during transportation and manufacturing as well as operation. Because many varying and different embodiments may be made within the scope of the inventive concept(s) herein taught, and because many modifications may be made in the embodiments described herein, it is to be understood that the details herein are to be interpreted as illustrative and non-limitind.

The present disclosure may provide to the oil/natural gas industry efficient systems and methods for storing CO₂ in shales depleted of CH₄.

The U.S. Energy Information Administration (EIA) estimates in the Annual Energy Outlook 2015 that about 11.34 trillion cubic feet (321.1 trillion cubic metres) of dry natural gas was produced directly from shale and tight oil resources in the United States in 2013. If we assume that 11 trillion cubic feet of CH₄ is produced, this is equivalent to 311 trillion Liters. At standard temperature and pressure, 22.4 Liters is equal to 1 mole of any gaseous material. Thus, 311 trillion Liters of CH₄ is equal to 13.884 trillion moles of CH₄ produced.

The molar mass of CO₂ is 44 grams/mol. If we assume a 1-fold excess of C0₂ would be sequestered in addition to the C0₂ generated in CH₄ combustion. Then 13.884 trillion moles CO₂ would equal 610 trillion grams of CO₂. 610 trillion grams of CO₂ is equal to 610 million (metric) tons of CO₂. This would represent the amount of excess CO₂ sequestered into the shale reservoirs once the process reaches steady state per year assuming a twofold exchange. If the value is closer to three-fold than the amount of CO₂ sequestered in excess of that used in power generation would be 1,220 million tons of CO₂.

On average the US emits 5,000 million ton of CO₂ per year from all sources. The main source is power generation. Assuming the ability of shale reservoirs to sequester two to three times the adsorptive capacity of CH₄ in the wells, then this process would result in a roughly 12-24% reduction in CO₂ emissions in the US. The EU (European Union) has set a target of reducing greenhouse gas emissions by 40% by 2030. It was intended that this should be simply by generation changes, However, using this process almost half of this target could be achieved without alteration of the infrastructure needs of the power generationor chemical industry that are the major users of *hydrocarbon* combustion for electricity and energy (heat) generation.

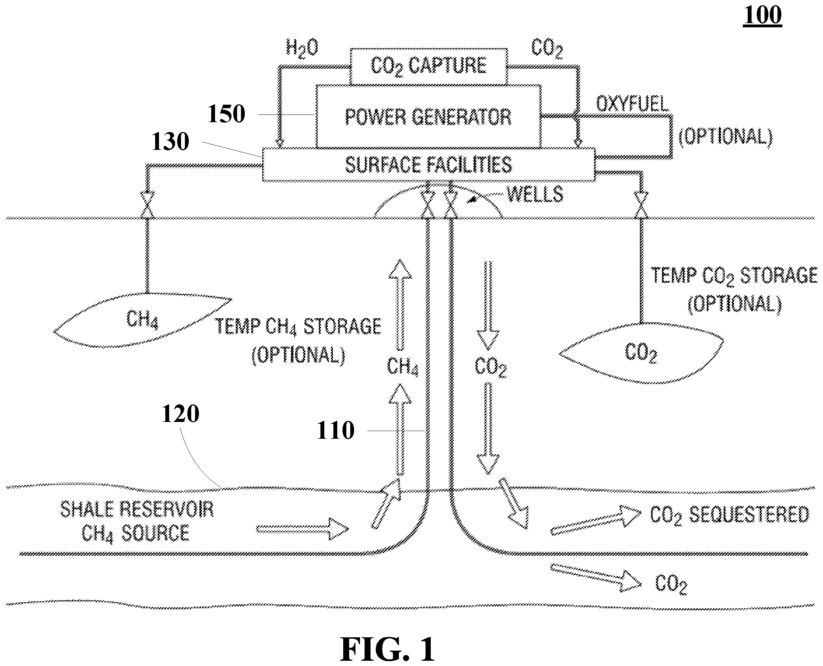

**FIG. 1** illustrates an exemplary components diagram of a system 100 for storing carbon compounds in an underground reservoir 120.

System **100** includes components to inject a fluid under pressure into an underground reservoir via a well 110. System **100** is used to stimulate the production (e.g., of hydrocarbons) by forming fractures in the well 110 through the provision of a pressurized proppant (that may be mixed with a fracturing fluid) through the well 110 and into the underground reservoir 120, which may maintain and/or support the fractures while permitting the flow of hydrocarbons or other fluids from the formation into the well 110 and toward the surface. **FIG. 1** may subdivide the depicted system 100 into a first subsystem: a fluid addition subsystem for providing fracturing fluid or a similar medium to the underground reservoir 120, a second subsystem: a proppant addition subsystem for providing proppant or a similar medium into the fracturing fluid, a third subsystem: a solvent addition subsystem adapted to provide a solvent for dissolving the proppant to the underground reservoir 120, a power subsystem/power generator 150 for providing power to one or more components of the system 100, and a pressure subsystem for pressurizing fluid for injection into the underground reservoir 120. It is noted that the fluid ionsubsystem, the proppant addition subsystern, the solvent addition subsystem, and the pressure subsystem may be represented be surface facilities 130, The pressure system comprises a pump in connection with the fluid and the proppant in order to pressurize at least one of the fluid and the proppant to a pressure sufficient to stimulate the underground reservoir 120. In embodiments, the pump may be in further communication with the solvent for pressurizing the solvent to a pressure sufficient to deliver the solvent to the underground reservoir 120.

It should be understood that the number, type, and arrangement of componets shown in **FIG. 1** is only one exemplary embodiment, and that the depicted illustration is diagrammatic, intended to conceptually depict one embodiment of the present system. As such, it should be noted that any number, type, and arrangement of identical or similar components could be used without departing from the scope of the present disclosure. Further, while the depicted embodiment includes multiple subsystems (fluid addition subsystem, proppant addition subsystem, solvent addition subsystem, power subsystem 150, pressure subsystem) used in combination, it should be understood that in various embodiments, the fluid addition subsystem may be used in the absence of the other subsystems (proppant addition subsystem, solvent addition subsystem, power subsystem 150, pressure subsystem) and/or in combination with conventional systems and/or components. Similarly, the proppant addition subsystem, the solvent addition subsystem, and the power and pressure subsystems 150 may be used independently or in combination with conventional systems and/or components.

In embodiments, the solvent addition subsystem may comprise elements similar to that of the fluid addition subsystem and the proppant addition subsystem But due to the corrosive nature of the solvent, embodiments of the solvent addition subsystem may comprise components including corrosive resistant interiors. This may reduce the frequency that components of the solvent addition subsystem may need to be replaced.

System 100 may comprise a removal subsystem (not depicted1 to remove the natural gas from the underground reservoir 120. The removal a subsystem may be incorporated within the pressure subsystem. In embodinants, the mechanism to pump fluids or other materials may be reversed in order to pump hydrocarbons out of the underground reservoir 120,

It is noted that, in embodiments, the removed natural gas may act as a fuel source for the production of electricity. This electricity may be used as a power source by system 100 and may be utilized to run components of system 100 to pump carbon compounds mack into the undergroind reservoir 120, thus saving money on the cost of running system 100. A power conversion unit (not depicted) may aid in this production of the electricity. The power conversion unit (not depicted) may break down the hydrocarbons pumped out of the well 110 (via combustion) and may produce electricity as well as byproducts, such as, but not limited to, carbon compounds including CO₂, and H₂O. The carbon compounds may be captured and subsequently pumped back into the underground reservoir 120 with the aid of the electricity (acting as a power source) produced by the power conversion unit. In embodiments, the power subsystem 150 may encompass the power conversion unit.

Once the underground reservoir 120 is at or near full volumetric capacity with sequestered CO₂ (at or near discovery pressure), in embodiments, the proppant may be dissolved by injecting the aqueous solvent into the well, which may allow the geologic forces previously resisted by the proppant to collapse and seal closed the underground reservoir 120. The CO₂ thus may be trapped within the rock underground.

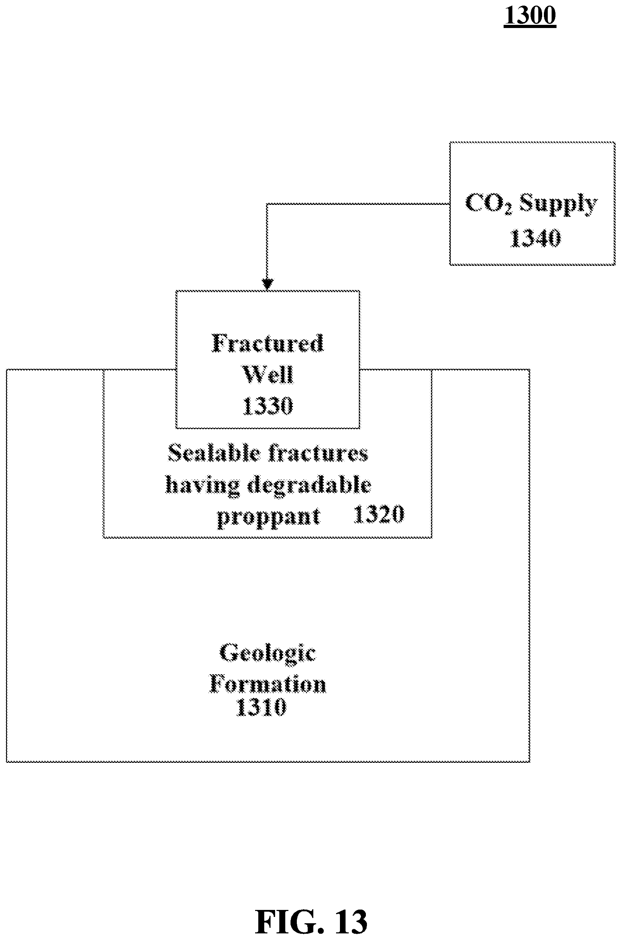

Referring to **FIG. 13****,** disclosed subject matter includes a sequestration system 1300 for permanent storage of CO₂ in an underground geologic formation 1310. Such a system 1300 may include introducing CO₂ under pressure from a CO₂ supply 1340 the geologic formation 1316 for storage therein. A system 1300 as disclosed may include a well 1330 having a wellbore that, during an introduction phase, is initially in fluid communication with open hydraulic fractures 1320 formed in the geologic formation 1310 for introducing the CO₂ under pressure into the geologic formation 1310. Such a system 1300, during a permanent storage phase, may include resealed hydraulic fractures formed by causing the open hydraulic fractures to be resealed, such as by geologic forces, to permanently prevent fluid communication between CO₂ stored in the formation and the fluid communication between CO₂ stored in the formation and the wellbore, and thus to permanently prevent CO₂ stored in the formation from escaping into the general atmosphere or environment above-ground via the wellbore. Such a sequestration system 1300 may include the well 1330 being formed by hydraulic fracturing for the production of hydrocarbons such as, for example, shale gas, from a reservoir of the underground geologic Formation 1310. A sequestration system 1300 includes degradable proppant in the resealed hydraulic fractures 1320. In embodiments, degradable proppant may be degradable by exposure to a degradation agent for reducing integrity of the proppant. It will be understood that the resealed hydraulic fractures 1320 may be resealed by geologic forces acting on the open hydraulic fractures in the presence of degraded proppant (not shown in **FIG. 13**). It will be understood that, in a system 1300, proppant in open hydraulic fractures 1320 may be degraded, for example, by exposing the proppant to a degrading agent such as, for example, a fluid degrading agent. It will be understood that a fluid degrading agent may be, for example, an acidic solution, an alkaline solution, or a fluid containing a degrading agent that is reactive with the proppant, or with at least a portion of the proppant, for dissolving, removing, reducing size, or reducing compressive strength of the proppant. Such a sequestration system 1300 may include the well 1330 formed in the geologic formation by hydraulic fracturing, CO₂ stored in the formation by introducing the CO₂ under pressure through the wellbore of well 1330 , and a closed or resealed hydraulic fracture 1320 sealing the stored CO₂ in the formation to prevent escape of the stored CO₂ into the wellbore of well 1330. Sequestration system 1300 may include the well 1330 formed by hydraulic fracturing associated with production of hydrocarbons, such as shale gas, from the underground formation 1310. A sequestration system 1300 as disclosed may include degraded proppant that provides for resealing of the initially open hydraulic fractures, such as by geologic forces exerted on the fractures. A system may include proppants that are safe for human ingestion which satisfy other criteria in relation to density, buoyancy, distribution, strength, and particle size.

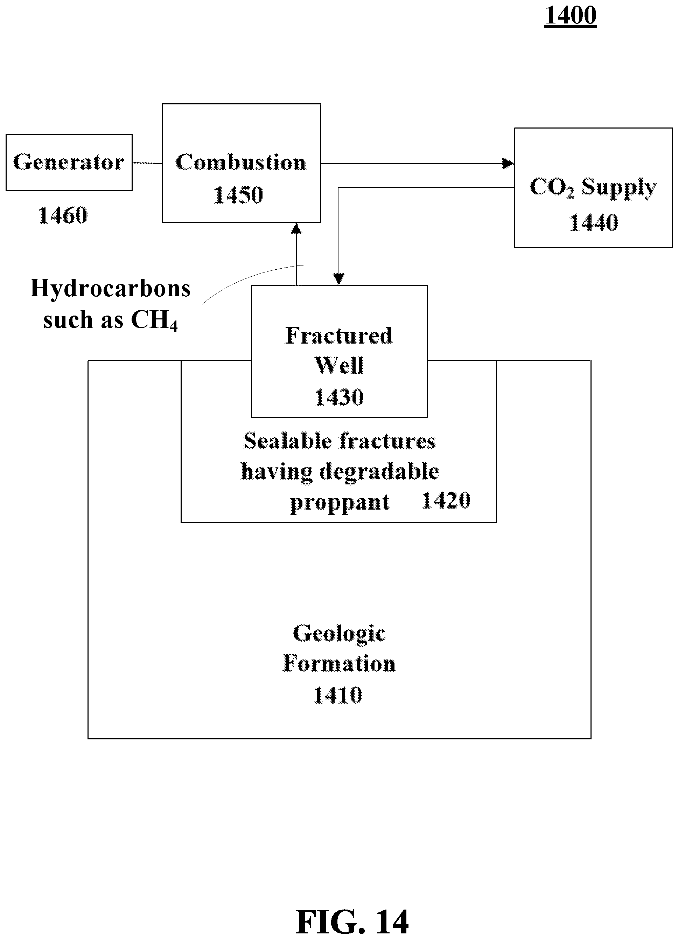

As shown in **FIG. 14****,** a sequestration system 1400 may include reaction or combustion equipment 1450 for combusting, reacting or converting hydrocarbons, such as shale gas, produced from the underground geologic formation 1410 through well 1430 to deplete the hydrocarbons from the geologic formation 1410 and form reaction products including CO₂ 1440, for the reaction products including CO₂ to be introduced back into the hydrocarbon-depleted geologic formation 1410 under pressure through the wellbore of well 1430 during an initial introduction phase, before the open hydraulic fractures are caused to reseal to form resealed hydraulic fractures 1420. The resealed hydraulic fractures 1420 during a permanent storage phase prevent fluid communication between CO₂ stored in the geologic formation 1410 and the wellbore of well 1430, and thus prevent CO₂ stored in the geologic formation 1420 from escaping through the wellbore of well 1430 into with the general atmosphere in the above-ground region. It will be understood that the reaction or combustion equipment 1450 may be associated with a generator 1460 for producing electricity or power in another suitable form from combustion of hydrocarbons produced from the geologic formation 1410 through well 1430. The generator 1460 may produce electricity that is offset and fully de-carbonized, and that is sufficient to power both storing the immediate reaction products including CO₂ under pressure in the geologic formation 1420 and also recovering and storing an additional amount of carbon-containing compounds such as CO₂ that is removed from Earth's surface region and atmosphere or otherwise provided from a supply of carbon-containing compounds such as CO₂ and that are to be permanently stored. It will be understood that system 1400 may provide permanent storage of carbon-containing compounds such as CO₂ under pressure in deep geological formations, such as shale, wherein the carbon-containing compounds such as CO₂ under pressure are isolated from communication with the wellbore of well 1410 by the resealed hydraulic fractures 1420 being sealed by geologic forces and without incurring risk of gas being released into the general atmosphere due to failure of a cement or other mechanical seal in well 1410. It will be understood that such system 1400 may provide for permanent storage of large volumes of atmospheric C0₂, such as for large scale removal of CO₂ from the Earth's surface region and atmosphere.

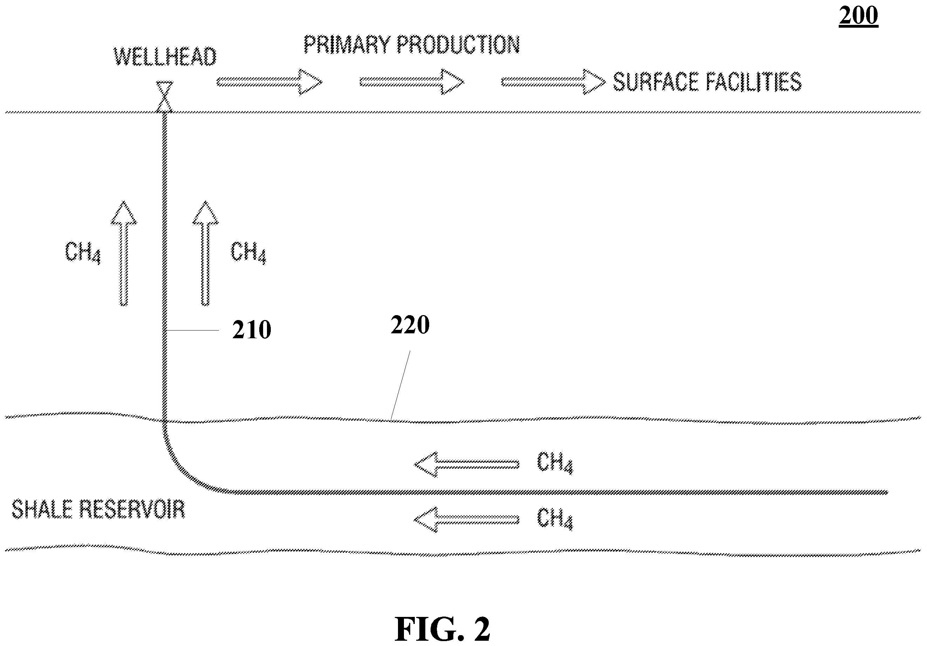

**FIG. 2** illustrates an exemplary production flowchart diagram 200 of the present disclosure. As shown, produced gas may be removed from the shale reservoir 220 via the well 210 using the pressure subsystem. Once removed, the gas may be transferred to the power subsystem 150. It is at this point that the gas may be burned, which may produce CO₂ and H₂O (1 billion cubic feet (30 million cubic metres) of CH₄ generates 11 million gallons (42 thousand cubic metres) of pure fresh H₂O), both of which may be captured and at least temporarily stored in appropriate storing chambers.

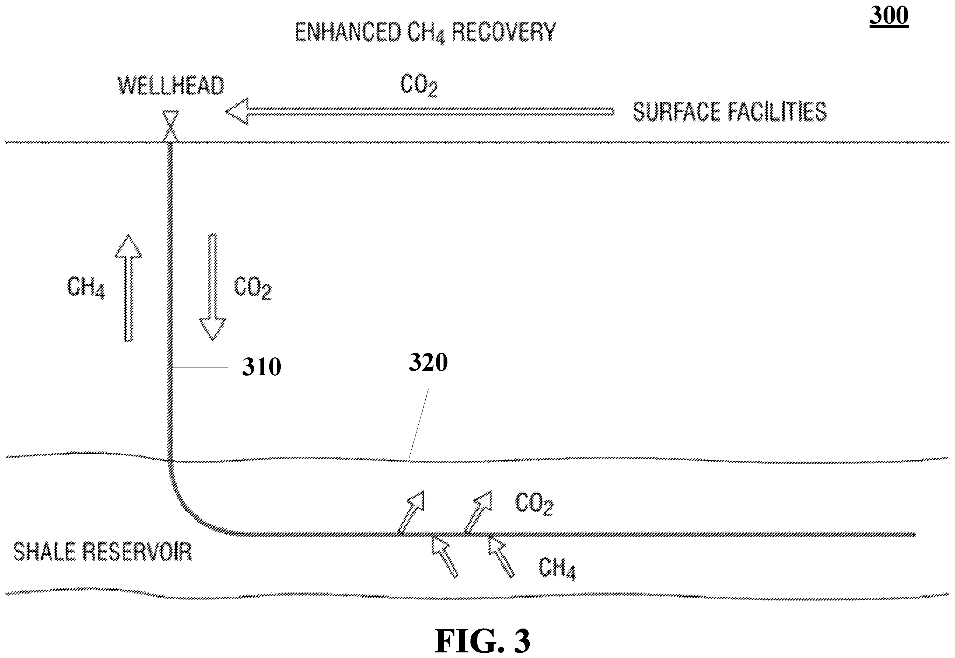

**FIG. 3** illustrates an exemplary CH₄ recovery flowchart diagram 300 of the present disclosure. In some instances, it may be feasible/desirable to periodically re-inject CO₂ into the depleting shale reservoir 320 (via well 310) which induces greater desorption of CH₄ and thus more natural gas production. This may be carried out using the pressure subsystem. The pressure subsystem may comprise a dual inlet/outlet and associated transferring equipment that may allow simultaneous extraction and transport of CH₄ and CO₂, This is because shale reservoirs are often more adsorptive of CO₂ than CH₄.

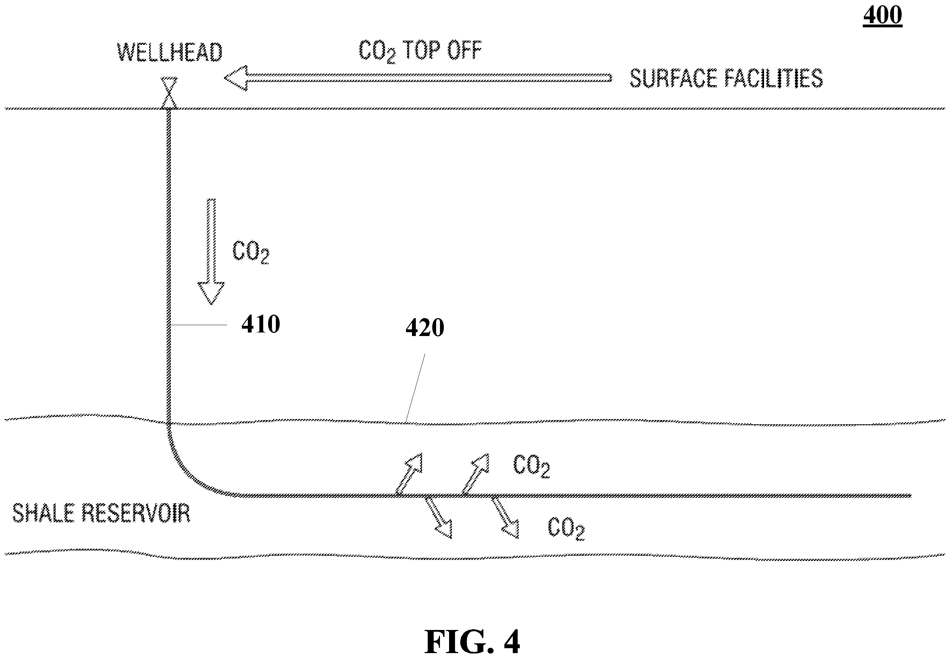

**FIG. 4** illustrates an exemplary CO₂ top-off flowchart diagram 400 of the present disclosure. Upon completion of the cycle, according to an embodiment, a process may result in the sequestration of more CO₂ than is generated from electric power made with the produced CH₄ extracted from shale reservoir 420 via well 410. In one aspect, a result may be low cost ubiquitously available electricity accompanied by profound net decreases in planetary CO₂.

According to disclosed subject matter, produced/vacating gas provides a permanent container or containment for all of the CO₂ this production creates upon combustion, and further may provide containment for even greater volumes of CO₂ removed directly from the atmosphere by system 100 when electric generation operations are not fully underway or idled. In embodiments, machinery that may extract additional CO₂ from the atmosphere may be utilized in connection with other components of system 100.

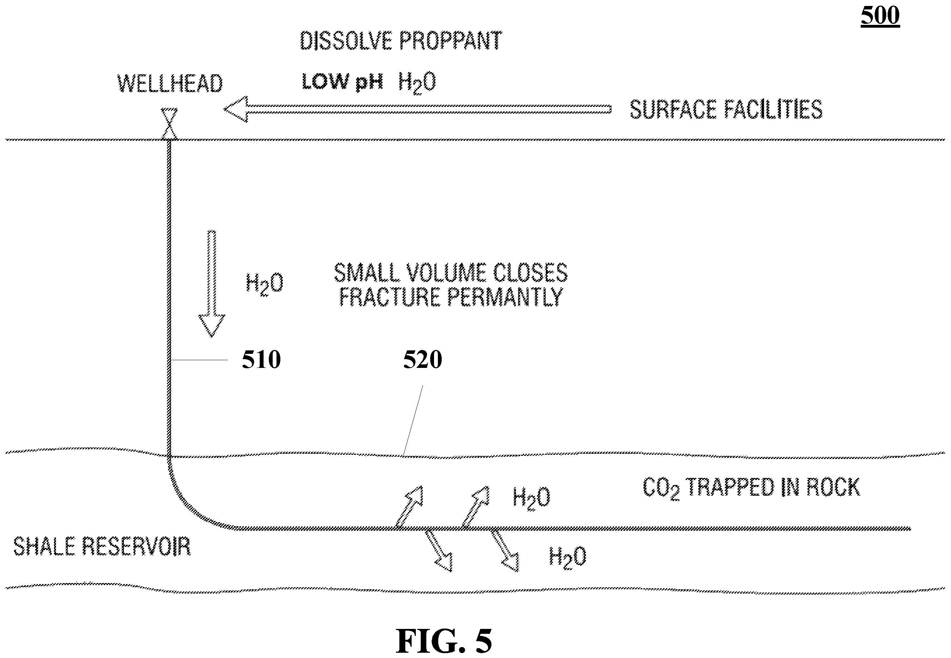

**FIG. 5** illustrates an exemplary dissolved proppant flowchart diagram 500 of the present disclosure. In a final stage, the proppant may be dissolved (in embodiments, in a low pH H₂O) to allow permanent closure of the fractures by the enormous geologic pressure that has been temporarily resisted by the proppant particles. Once sealed, the CO₂ may be pumped into the shale reservoir 520 via the well 510 and may be stored in the rock throughout geologic time and may not be vulnerable to loss of the integrity of the well bores used to access the reservoir.

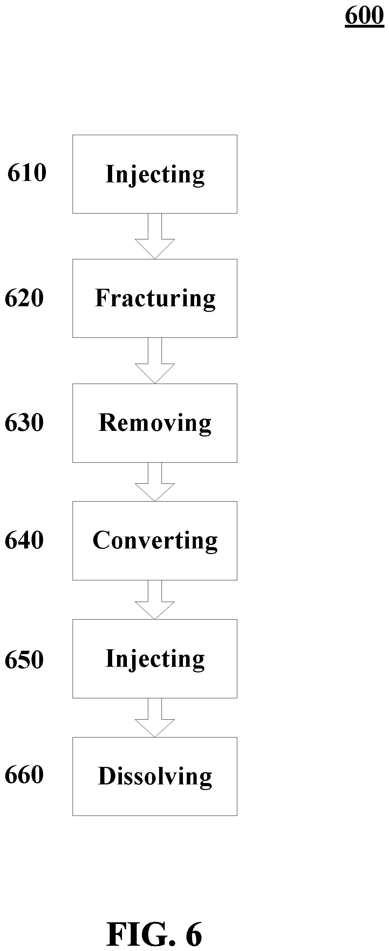

**FIG. 6** displays a method 600 for storing carbon compounds in an underground reservoir. Method 600 comprises injecting 610 proppant into an underground reservoir 120. The proppant may be injected 610 using a proppant addition subsystem. Additionally, a fluid addition subsystem may provide fluid to the underground reservoir 120 in addition to the proppant. Once injected 610, the proppant fractures 620 the underground reservoir 120, allowing for accessibility of hydrocarbons. The hydrocarbons are removed 630 from in situ loci within the underground reservoir 120 e.g. using a pressure subsystem.

Once extracted, the hydrocarbons may be converted 640 into electricity via processing of the hydrocarbons. The conversion 650 may include, in embodiments, capturing a byproduct from the converting 640 of the hydrocarbons into electricity. In embodiments, the byproduct may include carbon compounds. Once the hydrocarbons are processed, carbon compounds created during the processing may be injected 650 into the underground reservoir 120. This may be carried out using the pressure subsystem. In embodiments, the pressure subsystem may comprise reversible components so that pumping out of the ground and into the ground may be accomplished. After the desired amount of carbon compounds have been injected 650 into the underground reservoir 120, the proppant transferred into the underground reservoir is dissolved 660. This allows for the collapsing of the underground reservoir 120 and the trapping of the carbon compounds.

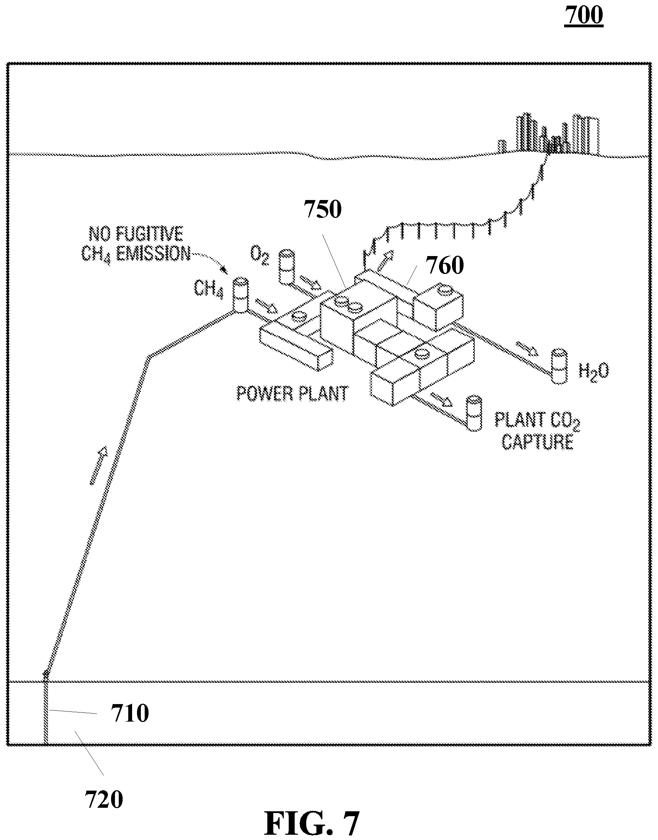

**FIG. 7** illustrates an exemplary production flowchart diagram 700 of the present disclosure. The natural gas/methane Which has been extracted may be used for electric power generation. The CO₂ that is formed upon combustion of the natural gas in the electric generator may be separated and captured to be re-injected into the shale fractures 710 via the well 710 for permanent, sequestration. Large quantities of pure water (H₂O) may also be formed when the natural gas CH₄ is burned with pure oxygen (O₂) rather than air within combustion facility 750. Generator 760 may convert the energy given off from the combustion of the natural gas into electrical energy, which may be supplied to residential and commercial establishments.

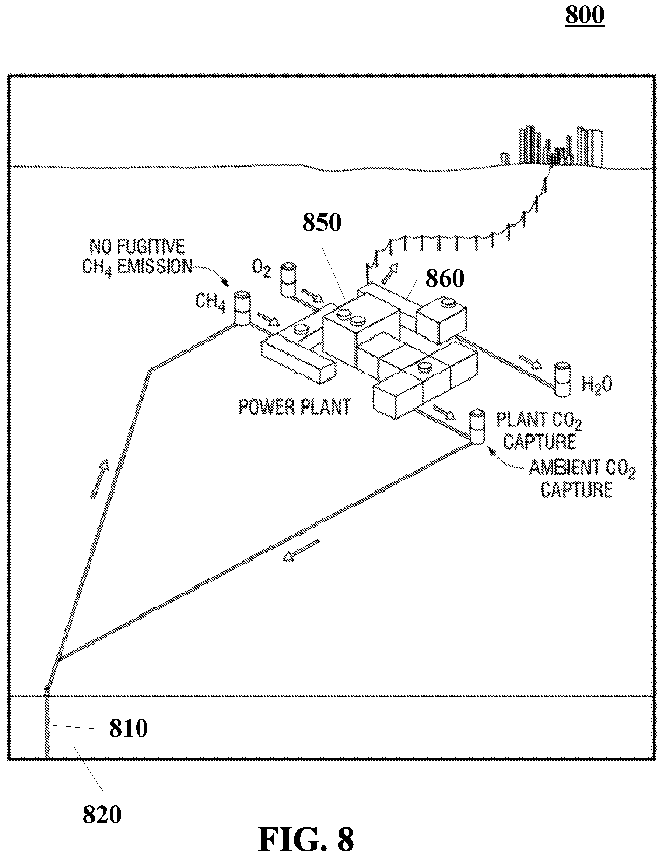

**FIG. 8** illustrates an exemplary production flowchart diagram 800 of the present disclosure. Additional ambient CO₂ captured from the atmosphere may be added to the sequestration injection stream, given the shales may be many times more absorptive of CO₂ than the original methane. The CO₂ may be pumped back into the shale fractures 820 via well 810. Large quantities of pure water (H₂O) may also be formed when the natural gas (CH₄) is burned with pure oxygen (O₂) rather than air within combustion facility 850. Generator 860 may convert the energy given off from the combustion of the natural gas into electrical energy, which may be supplied to residential and commercial establishments.

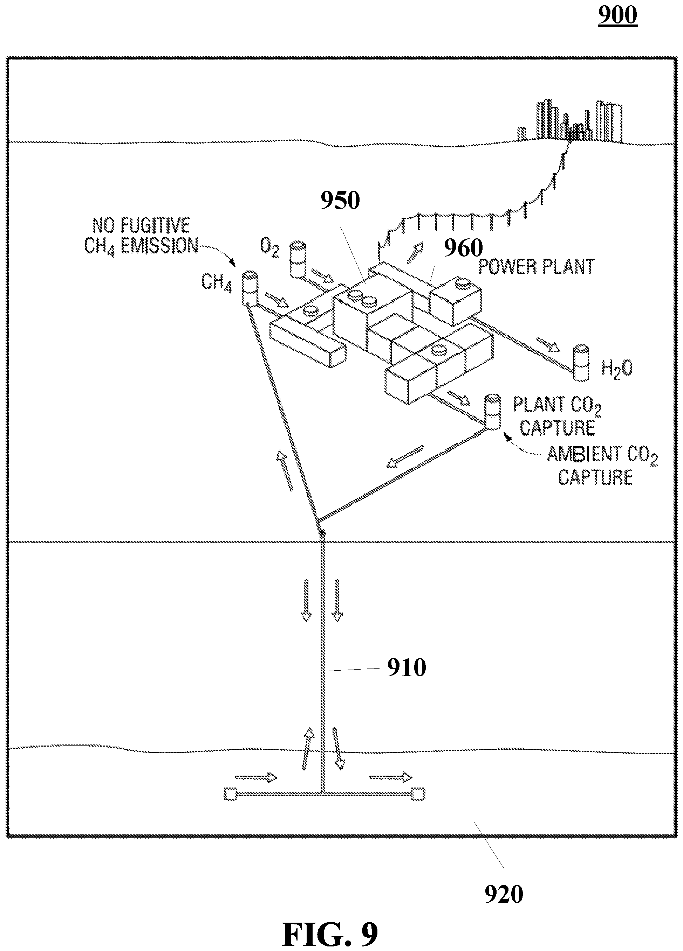

**FIG. 9** illustrates an exemplary production flowchart diagram 900 of the present disclosure. Additional ambient CO captured from the atmosphere may be added to the sequestration injection stream, which may be shown being injected into the shales. The CO₂ may be pumped back into the shale fractures 920 via well 910. Large quantities of pure water (H₂O) may also be formed when the natural gas (CH₄) is burned with pure oxygen (O₂) (O₂) rather than air within combustion facility 950. Generator 960 may convert the energy given off from the combustion of the natural gas into electrical energy, wich may.be supplied to residential and commercial establishments.

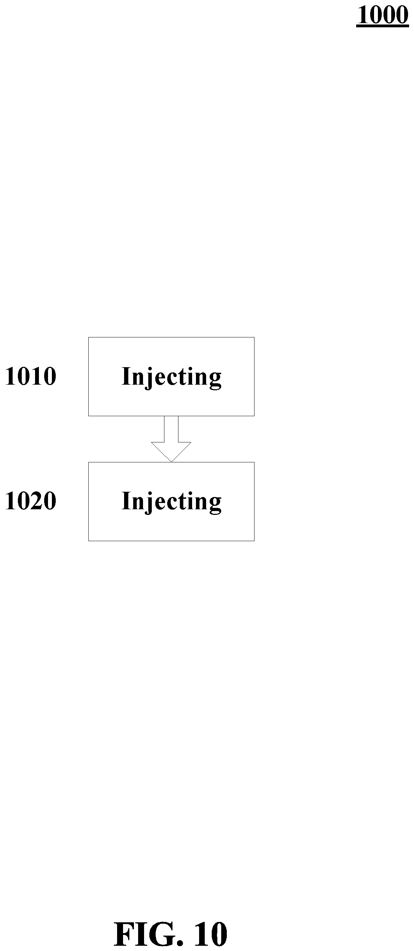

**FIG.10** illustrates a method 1000 for storing carbon containing compounds in a formation associated with a pre-existing fracturing well formed by hydraulic fracturing in accordance with embodiments. Method 1000 comprises injecting 1010 a solution into the formation. The solution is capable of at least partially degrading the structural integrity of proppant positioned within the formation. Method 1000 further comprises injecting 1020 the carbon containing compounds into the formation.

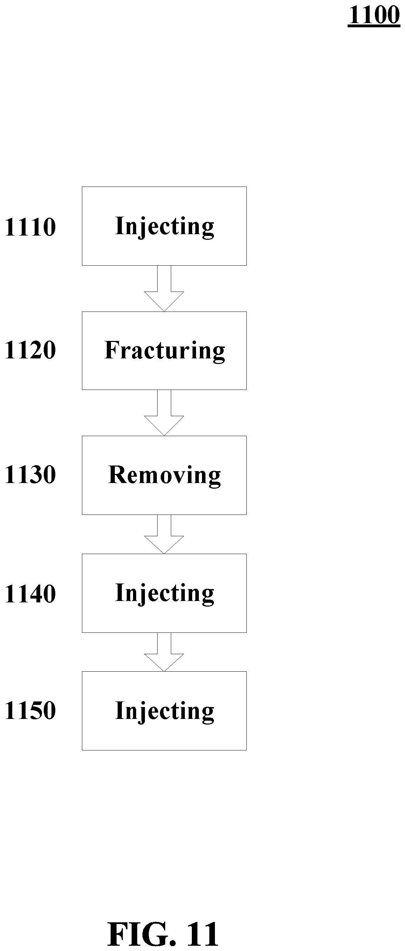

**FIG. 11** illustrates a method 1100 for storing carbon containing compounds in a formation associated with a fracturing well formed by hydraulic fracturing in accordance with embodiments. Method 1100 comprises injecting 1110 proppant into the formation. The formation is then fractured 1120. Hydrocarbons are then removed 1130 from in situ loci within the formation.

Method 1100 further comprises injecting 1140 the carbon containing compounds into the formation. A solution is then injected 1150 into the formation. The solution is capable of at least partially degrading the structural integrity of proppant positioned within the formation. In embodiments, a volume of the carbon containing compounds may be greater than a volume of the removed hydrocarbons.

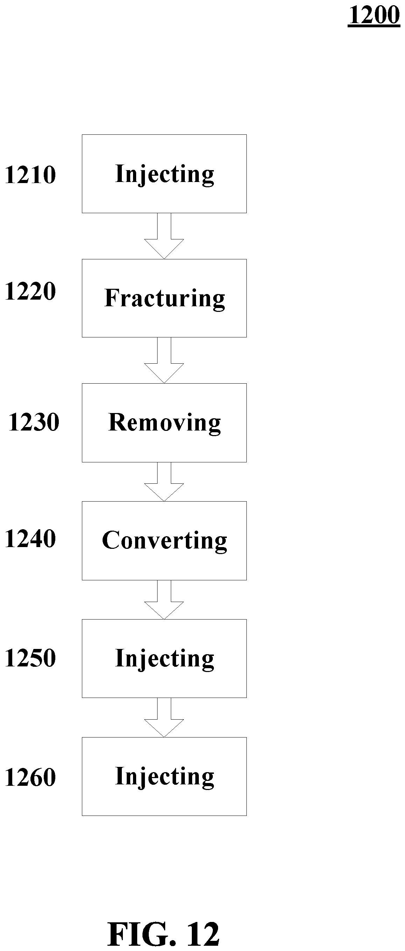

**FIG. 12** illustrates a method 1200 for producing electricity by combustion of hydrocarbons without releasing carbon containing compounds into the atmosphere in accordance with embodiments. Method 1200 may comprise injecting 1210 proppant into the formation. The formation may then be fractured 1220. Hydrocarbons may then be removed 1230 from in situ loci within the formation.

Method 1200 may further comprise converting 1240 the hydrocarbons into electricity. The converting 1240 may produce the carbon containing compounds. The carbon containing compounds may then be injected 1250 into the formation simultaneously with the converting. A solution may then be injected 1260 into the formation. The solution may be capable of at least partially degrading the structural integrity of proppant positioned within the formation.

**FIG. 13** is a simplified block diagram illustrating aspects of a system 1300 for storing carbon containing compounds in a pre-existing fractured well in accordance with embodiments. System 1300 may comprise a formation 1310. The formation 1310 may comprise sealable fractures 1320 including degraded proppant and a fractured well 1330 formed by hydraulic fracturing. System 1300 may further comprise a carbon containing compound supply 1340. In embodiments, at least a portion of the carbon containing compound supply 1340 may be injected into the formation.

In embodiments, the proppant may be selected based on properties relative to degradation such as, for example, degradation of compressive strength, size, porosity, density, or molecular structure. In embodiments, the formation may be a shale.

**FIG. 14** is a simplified block diagram illustrating a system 1400 for storing carbon containing compounds in a fractured well. System 1400 may comprise a formation 1410. The formation 1410 may comprise sealable fractures 1420 including degradable proppant and a fractured well 1430 formed by hydraulic fracturing. System 1400 may further comprise a carbon containing compound supply 1440 and a combustion source 1450. The combustion source 1450 may supply carbon containing compounds to the carbon containing compound supply 1440. In embodiments, the combustion source 1450 may be capable of producing energy from the combustion of the carbon containing compounds. This energy may be converted via generator 1460. In embodinents, at least a portion of the carbon containing compound supply 1440 may be injected into the formation 1410.

In embodiments, the proppant may be selected based on properties relative to degradation such as, for example degradation of compresive stregth, size, porosity, density, or molecular structure. In embodiments, the formation may be a shale.

In any embodiments of the aforementioned methods, the proppant may be selected based on properties relative to degradation such as, for example, degradation of compressive strength, size, porosity, density, or molecular structure.

In any embodiments of the aforementioned methods, the formation may be a shale.

In any embodiments of the aforementioned methods, the solution may be an alkaline solution.

In any embodiments of the aforementioned methods, the solution may be an acidic solution.

In any embodiments of the aforementioned methods, the at least partially degrading may comprise at least partially dissolving the structural integrity of the proppant.

Further, system 100 may provide back-up electrical power for the intermittent interruption in power generation provided by wind, wave, and solar devices.

In embodiments, underground reservoir 120 may be a shale reservoir.

In embodiments, hydrocarbons other than CH₄ may be extracted from one or more underground reservoirs 120 and subsequently processed.

In embodiments, the fracturing fluid may comprise light weight alkanes.

In embodiments, the specialized proppant may be dissolved by injecting a low pH fluid into a fracture system.

In embodiments, the light weight alkanes may be recoverable.

In embodiments, pumps may be needed for the CO₂.

The following references are relied upon:

Numerical Simulation and Modeling of Enhanced Gas Recovery and Co2 Sequestration in Shale Gas Reservoirs (Amirmasound K. Dahaghi, West Virginia University, Society of Petroleum Engineers 2010).

carbon Dioxide storage capacity of Organic-Rich shales (S.M. Kang, E. Fathi, R.J. Ambrose, I.Y. Akkutlu, and R.F. Sigal, The University of Oklahoma, Society of Petroleum Engineers 2011).
https://www.netl.doe.gov/publications/proceedings/01 /carbon_seq/7b1.pdf
http://mitei.mit.edu/news/new-way-capture-co2-emissions-lower-costs-easier-installation
https:/www.globalccsinstitute.com/content/how-ccs-works-capture
http://www.cesassociation.org/index.php/what-is-ces/capture/post-combustion-capture/
http://www.ccsassociation.org/what-is-ccs/capture/oxy-fuel-combustion-systems/

In embodiments, the proppant may be at least one of amorphous silica, mesoporous-amorphous silica, boron-laced or boro-amorphous silica, and boron-laced or boro-mesoporous-amorphous silica.

In embodiments, any of the mentioned proppants may be dissolvable via an acidic solution.

While various embodiments usable within the scope of the present disclosure have been described with emphasis, it should be understood that within the scope of the invention as defined by the appended claims, the present invention can be practiced other than as specifically described herein.

## Claims

1. A method for storing carbon containing compounds in a formation associated with a fracturing well formed by hydraulic fracturing, the method comprising:
injecting proppant into the formation;
fracturing the formation, thereby forming fractures;
removing hydrocarbons from in situ loci within the formation;
injecting the carbon containing compounds into the formation;
and
injecting a solution into the formation, the solution capable of at least partially degrading the structural integrity of the proppant positioned within the formation, thereby resealing the fractures.

2. A method for producing electricity by combustion of hydrocarbons without releasing carbon containing compounds into the atmosphere, the method comprising the method steps of Claim 1, the method further comprising:
converting the hydrocarbons into electricity, wherein the converting produces the carbon containing compounds;
wherein the injecting the carbon containing compounds into the formation takes place simultaneously with the converting.

3. The method of Claim 1 or Claim 2, the solution being an alkaline solution or an acidic solution.

4. The method of Claim 1 or Claim 2, the at least partially degrading comprising at least partially dissolving the structural integrity of the proppant.

5. The method of Claim 1 or Claim 2, the degradable proppant is degradable by exposure to a degradation agent for reducing integrity of the proppant.

6. The method of Claim 1 or Claim 2, the formation being a shale.

## Patentansprüche

1. Verfahren zum Lagern von kohlenstoffhaltigen Verbindungen in einer Formation im Zusammenhang mit einem Bohrloch für Fracturing, gebildet durch Hydraulic Fracturing, wobei das Verfahren Folgendes umfasst:
Injizieren von Proppant in die Formation;
Aufbrechen der Formation, wodurch Frakturen gebildet werden;
Entfernen von Kohlenwasserstoffen aus In-situ-Loci in der Formation;
Injizieren der kohlenstoffhaltigen Verbindungen in die Formation;
und
Injizieren einer Lösung in die Formation, wobei die Lösung in der Lage ist, die Integrität der Struktur des Proppants, das in der Formation positioniert ist, mindestens teilweise abzubauen, wodurch die Frakturen wiederverschlossen werden.

2. Verfahren zum Erzeugen von Elektrizität durch Verbrennung von Kohlenwasserstoffen ohne die Freisetzung von kohlenstoffhaltigen Verbindungen in die Atmosphäre, wobei das Verfahren die Verfahrensschritte nach Anspruch 1 umfasst, wobei das Verfahren ferner Folgendes umfasst:
Umwandeln der Kohlenwasserstoffe in Elektrizität, wobei die Umwandlung die kohlenstoffhaltigen Verbindungen erzeugt;
wobei das Injizieren der kohlenstoffhaltigen Verbindungen in die Formation gleichzeitig mit der Umwandlung stattfindet.

3. Verfahren nach Anspruch 1 oder Anspruch 2, wobei die Lösung eine Alkalilösung oder eine saure Lösung ist.

4. Verfahren nach Anspruch 1 oder Anspruch 2, wobei der mindestens teilweise Abbau das mindestens teilweise Auflösen der Integrität der Struktur des Proppants umfasst.

5. Verfahren nach Anspruch 1 oder Anspruch 2, wobei das abbaubare Proppant durch Aussetzen unter ein Abbaumittel zum Verringern der Integrität des Proppants abgebaut werden kann.

6. Verfahren nach Anspruch 1 oder Anspruch 2, wobei die Formation ein Schiefergestein ist.

## Revendications

1. Procédé de stockage de composés contenant du carbone dans une formation associée à un puits de fracturation formé par fracturation hydraulique, le procédé comprenant :
l'injection d'un agent de soutènement dans la formation ;
la fracturation de la formation, formant ainsi des fractures ;
l'élimination des hydrocarbures des loci in situ dans la formation ;
l'injection des composés contenant du carbone dans la formation ; et
l'injection d'une solution dans la formation, la solution étant capable de dégrader au moins partiellement l'intégrité structurelle de l'agent de soutènement positionné dans la formation, rescellant ainsi les fractures.

2. Procédé de production d'électricité par combustion d'hydrocarbures sans rejet de composés contenant du carbone dans l'atmosphère, le procédé comprenant les étapes du procédé selon la revendication 1, le procédé comprenant en outre :
la conversion des hydrocarbures en électricité, la conversion produisant les composés contenant du carbone ;
l'injection des composés contenant du carbone dans la formation ayant lieu simultanément à la conversion.

3. Procédé selon la revendication 1 ou la revendication 2, la solution étant une solution alcaline ou une solution acide.

4. Procédé selon la revendication 1 ou la revendication 2, la dégradation au moins partielle comprenant la dissolution au moins partielle de l'intégrité structurelle de l'agent de soutènement.

5. Procédé selon la revendication 1 ou la revendication 2, l'agent de soutènement dégradable étant dégradable par exposition à un agent de dégradation destiné à réduire l'intégrité de l'agent de soutènement.

6. Procédé selon la revendication 1 ou la revendication 2, la formation étant un schiste.
